# EUROPEAN PATENT SPECIFICATION

(11) **EP 3 692 280 B1**
(45) Date of publication and mention of the grant of the patent: **11.05.2022**
(21) Application number: 18779382.3
(22) Date of filing: 01.10.2018
(51) Int. Cl.: F16H 61/00, F16H 61/688, F16H 3/00

(54) **LOCK CONTROL METHOD ON A DUAL CLUTCH TRANSMISSION ARCHITECTURE**
VERRIEGELUNGSSTEUERUNGSVERFAHREN AUF EINER DOPPELKUPPLUNGSGETRIEBEARCHITEKTUR
PROCÉDÉ DE COMMANDE DE VERROUILLAGE SUR UNE ARCHITECTURE DE TRANSMISSION À DOUBLE EMBRAYAGE

(30) Priority: 02.10.2017 IT 201700110195
(43) Date of publication of application: 12.08.2020
(73) Proprietor: CNH Industrial Italia S.P.A., 10135 Turin (IT)
(72) Inventor: PETRIGLIANO, Rocco, 75029 Valsinni (MT) (IT); GUIDETTI, Marco, 41012 Capri (Modena) (IT); INVERSANI, Alessio, 41030 Cavezzo (Modena) (IT); BERSELLI, Alberto, 41043 Modena (IT)
(74) Representative: CNH Industrial IP Department
(86) International application number: PCT/EP2018/076666
(87) International publication number: WO 2019/068651

(56) References cited:
- EP-A1- 2 354 583
- EP-A2- 2 243 983
- US-A- 4 989 470
- US-A1- 2007 289 399
- US-A1- 2009 203 484

## Description

### TECHNICAL FIELD

The present invention concerns a method for locking a dual clutch transmission of a work vehicle.

### BACKGROUND OF THE INVENTION

It is often necessary to decelerate work vehicle, and even to temporarily stop them during their operation, e.g. during the wrapping operation of a baler. Usually such deceleration is obtained by using the service brakes and eventually a park brake is used to keep the vehicle at standstill.

Work vehicles are nowadays equipped by dual clutch transmissions (DCT) in order to improve the performances of the vehicle itself, e.g. the velocity during the change of the speed ratios. Moreover, DCT are suitable for being easily automated.

Essentially, DCT comprises two large main clutches, namely forward and rearward clutches, configured to select two auxiliary shafts which carries the gears which defines, the speed ratios which are selectable between an input shaft, namely the engine shaft, and an output shaft, namely the input shaft of the drive system of the work vehicle.

Since DCT main clutches are large they can dissipate a lot of energy and therefore it is known to modulate their activation in order to decelerate the vehicle, alternatively to or in combination with service brakes. Examples of a method for decelerating a vehicle using DCT main clutches are disclosed in US2007/0289399A1 , EP2354583A1 and US4989470A.

In fact, when driving forward, it is known to disengage the forward clutch and simultaneously select the rearward clutch in order to use the engine torque to brake the transmission thanks to the dissipation by slipping in the rearward clutch, on condition that a gear is selected. This configuration may be maintained till the vehicle is still.

However, when the vehicle is at stand still, the forward and rearward clutches must be maintained slipping in order to prevent the stall of the engine. In this way clutches dissipate a lot of energy in heat and therefore the aforementioned condition cannot be maintained for the time which is necessary to the work vehicle to complete its operation.

Therefore, the need is felt to improve existing methods of control dual clutch transmissions in order to lock the transmission when the work vehicle is at stand still.

An aim of the present invention is to satisfy the above-mentioned needs.

### SUMMARY OF THE INVENTION

The aforementioned aim is reached by a method according to independent claim 1.

### BRIEF DESCRIPTION OF THE DRAWINGS

For a better understanding of the present invention, a preferred embodiment is described in the following, by way of a non-limiting example, with reference to the attached drawings wherein:
- Figure 1 is a first schematic representation of a dual clutch transmission architecture on which can be implemented the locking method according to the present invention;
- Figures 2-7 are schematic representations of the dual clutch transmission of figure 1 during different phases of operation of the transmission of figure 1 according to the present invention; and
- Figure 8 is a schematic representation of the operation of a method for unlocking the transmission of figure 1.

### DETAILED DESCRIPTION OF THE INVENTION

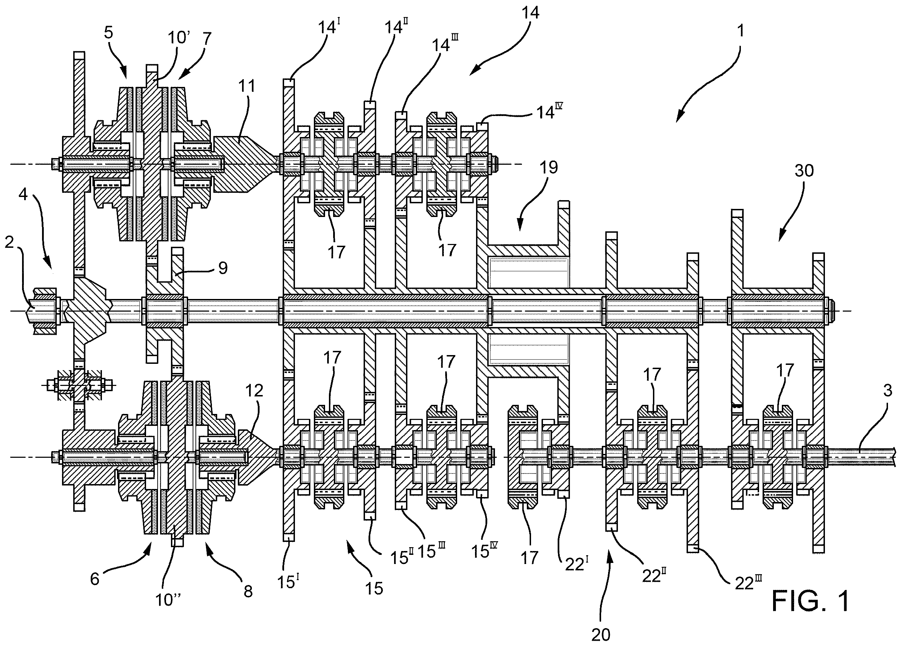

Figure 1 discloses a dual clutch transmission 1 of a work vehicle, such as a tractor (not illustrated), comprising an engine input shaft 2, operatively connected to an engine (not illustrated) of the work vehicle, and an output shaft 3, which can be coupled to the drive system of the work vehicle.

Transmission 1 moreover comprises a first main clutch 5, hereinafter "forward clutch", and a second main clutch 6, hereinafter "rearward clutch", both coupled to the engine input shaft 2 via an input stage 4. Preferably the forward clutch 5 and the rearward clutch 6 are placed opposite each other with respect to the input shaft 2.

In a known configuration, the forward clutch 5 couples the engine input shaft 2 to the output shaft 3 in order to allow a forward motion of the work vehicle while the rearward clutch 6 couples the engine input shaft 2 to the output shaft 3 in order to allow a rearward motion of the work vehicle.

Preferably forward clutch 5 and rearward clutch 6 are wet clutches and are controlled by a hydraulic circuit (not shown) which is configured to allow at least four possible conditions:
- a first condition, corresponding to clutches 5 and 6 disengaged, in which in clutches 5 and 6 no hydraulic fluid, or a hydraulic fluid at low pressure, is present;
- a second condition, corresponding to clutches 5 and 7 still disengaged but ready to transmit a torque, in which in clutches 5 and 6 is present a hydraulic fluid at a pre-set limit pressure;

- a third condition, corresponding to clutches 5 and 7 engaged but not able to transmit all the possible torque, in which in clutches 5 and 6 is present a hydraulic fluid at pressure such that torque is transmitted but there is still slipping. The torque transmitted is obviously proportional to the pressure of such hydraulic fluid.
- a fourth condition, corresponding to clutches 5 and 7 engaged and transmitting all the torque, in which in clutches 5 and 6 is present a hydraulic pressure at a pre-set level of pressure to ensure the transmission of all the torque.

Transmission 1 comprises a first clutch 7, hereinafter "even clutch", and a second clutch 8, hereinafter "odd clutch". The even clutch 7 is configured to couple a first auxiliary shaft 11, hereinafter "even shaft", with the forward clutch 5. The odd clutch 8 is configured to couple a first auxiliary shaft 12, hereinafter "odd shaft", with the rearward clutch 6.

Advantageously, the forward clutch 5 is coupled to the even clutch 7 by a first housing 10' and the rearward clutch 6 is coupled to the odd clutch 8 by a second housing 10ʺ. The first and the second housing 10', 10ʺ are coupled together by an intermediate gear 9 carried by the engine input shaft.

Preferably the intermediate gear 9 is configured to be coupled to the first housing 10' through a first gear ratio and to be coupled to the second housing 10ʺ through a second gear ratio. The first and the second gear ratio are preferably different.

In view of above, thanks to the coupling of the housings 10', 10ʺ with the intermediate gear 9, the even shaft 11 may be coupled to the rearward clutch 6 and the odd shaft 12 may be coupled to the forward clutch 5.

The even shaft 11 and the odd shaft 12 each comprise a plurality of gears having a different size one with respect to the other.

Preferably the even shaft 11 may comprise four gears 14, namely a first gear 14ⁱ having the biggest diameter, a fourth gear 14^{iv} having the smallest diameter and a second and third gears l4ⁱⁱ, 14ⁱⁱⁱ having respective diameters comprised between the ones of first and the fourth gears.

Similarly, the odd shaft 12 may comprise four gears 15, namely a first gear 15ⁱ having the biggest diameter, a fourth gear 15^{iv} having the smallest diameter and a second and third gears l5ⁱⁱ, l5ⁱⁱⁱ having respective diameters comprised between the ones of first and the fourth gears.

Advantageously the gear 14ⁱ has the same diameter of gear 15ⁱ, gear l4ⁱⁱ has the same diameter of gear l5ⁱⁱ, gear l4ⁱⁱⁱ has the same diameter of gear 15ⁱⁱⁱ and gear 14^{iv} has the same diameter of gear 15^{iv}.

The gears of gears set 14, 15, when coupled with the engine shaft 2, represent the different speed ratios of the transmission that the can be selected; namely first speed ratio selecting gear 15^{iv}, second speed ratio selecting gear 14^{iv}, third speed ratio selecting gear 15ⁱⁱⁱ, fourth speed ratio selecting gear 14ⁱⁱⁱ, fifth speed ratio selecting gear l5ⁱⁱ, sixth speed ratio selecting gear 14ⁱⁱ, seventh speed ratio selecting gear 15ⁱ or eighth speed ratio selecting gear 14ⁱ

As known, a gears of the gears sets 14, 15 may be selected by a synchronizer 17 configured to slide on the shafts 11, 12 and to couple the latter with the chosen gear. Preferably the even shaft 11 may comprise two synchronizers 17 interposed respectively between the gear 14ⁱ - l4ⁱⁱ and l4ⁱⁱⁱ -14^{iv}. Similarly, the odd shaft 12 may comprise two synchronizers 17 interposed respectively between the gear 15ⁱ - 15ⁱⁱ and 15ⁱⁱⁱ -15^{iv}.

Each gear of the gear sets 14, 15 is coupled with an intermediate geared shaft 19 which may be directly connected with the output shaft 3.

The intermediate geared shaft 19 may be coupled directly to the output shaft 3 or, preferably, through an additional stage, namely a range selecting stage 20. The range selecting stage 20 is configured to couple the intermediate gear shaft 19 with the output shaft 3 by choosing a plurality gear ratios which can be combined with the above described speed ratios.

For example, the range selecting stage 20 comprises a first gear 22', a second gear 22ʺ and a third gear 22‴ having different dimensions and configured to couple with different portions of the intermediate gearing 19 thanks to respective synchronizers 17.

Other stages may be provided between the range selecting stage 20 and the output 3, e.g. a creeping stage, in order to further modulate the torque and the velocity of the output shaft 3 with respect to the engine shaft 2.

The above described clutches 5-8 and synchronizers 17 can be selected by respective actuators (not illustrated) controlled by an electronic unit. Preferably the electronic unit can be the ECU of the vehicle. The electronic unit is configured to control the above cited elements of the transmission 1 after a direct input of the user of the vehicle or automatically thanks to a specific program, which can be implemented on the electronic unit.

An example of typical operations of the described transmission 1 is described in the following.

A first example of operation is the take-off of transmission 1 from a park condition of the vehicle in which the park brake is engaged and the engine is off.

The user switch on the engine and take the shuttle shift lever from park to forward position; in this condition clutches 5 and 6 are still open and the engine shaft 2 starts to rotate, consequently all the elements which are directly coupled to the engine shaft 2 (e.g. the input stage 4) are rotating. A gear between one between the odd or even shaft 11, 12, e.g. gear 14^{iv} of even shaft 11, is selected thanks to a synchronizer 17, a gear of the range selecting stage 20, e.g. gear 22', is selected thanks to a synchronizer 17 and even clutch 8 is engaged. In this way, there is a continuous mechanical path between the output shaft 3 to even shaft 11 thanks to intermediate gearing shaft 19. For example, moving a lever, the forward clutch 4 is engaged and the housings 10' and 10ʺ start to rotate and make, thanks to even clutch 7, to rotate the even shaft 11 and consequently the intermediate geared shaft 19 and the output shaft 3 thanks to the mechanical connection which is established form engine shaft 2 to output shaft 3.

A second example of operation is the shift of gear, e.g. passing from gear 14^{iv} to gear 15ⁱⁱⁱ, when the vehicle is moving, e.g. forward.

Since the vehicle is moving forward the mechanical path between the engine shaft 2 and the output shaft 3 is the same as described in the previous example. Therefore, forward clutch 5 is engaged, even clutch 7 is engaged, in order to connect even shaft 11 to the engine input shaft 2 and gears, e.g., 14^{iv} and 22' are selected to connect the even shaft 11 to the output shaft 3 via the intermediate geared shaft 19. The user may upshift (or downshift) by selecting the desired ratio, e.g. by selecting a button on a handle. The vehicle may moreover be provided by a dedicated program configured to recognize the resistant torque at the output shaft 3 and automatically change to a suitable ratio.

Supposing that the user decided to upshift to gear 15ⁱⁱⁱ, gear l5ⁱⁱⁱ is preselected thanks to synchronizer 17 and therefore the odd shaft 12 starts to rotate at same velocity of even shaft 11. The odd clutch 7 is therefore dumped and the even clutch 8 is engaged. By "switching" from odd clutch 7 to even clutch 8, a new mechanical path between engine shaft 2 to output shaft 3, passing from even shaft 12 and intermediate geared shaft 19, is established. In this way, there is not an "hole" of the torque transmitted between the engine shaft 2 and the output shaft 3 during the change of the gear shift.

A third example of operation is switching from forward and rearward (or vice versa), also known as "shuttle shift".

When the vehicle is moving forward, e.g. using the configuration of transmission 1 after the take-off described above in the first example, the forward clutch 5 is dumped and simultaneously the rearward clutch 6 is engaged. In this way the vehicle starts to move with the same gear but rearwards.

The present invention relates to a method of locking the above described transmission 1, when the vehicle has been decelerated below a certain threshold, by modulating the forward and rearward clutches 5, 6.

The method comprises the following steps:
- a first phase in which the vehicle speed is reduced until a predetermined velocity while a gear of gear sets 14, 15 is engaged to give a driving torque to one of the first and second shafts 11, 12;
- a second phase in which the vehicle is maintained at a predetermined velocity;
- a third phase in which a gear of gear sets 14, 15 of the other of the first and second shafts 11, 12 is engaged;

- a fourth phase in which the first and second clutches 7, 8 are both engaged in order to block the transmission 1; and
- a fifth phase in which the forward and rearward clutches 5, 6 are disengaged and the input shaft 2 is consequently decoupled form transmission 1.

A non-limiting detailed example of operation of the above-mentioned method is the following.

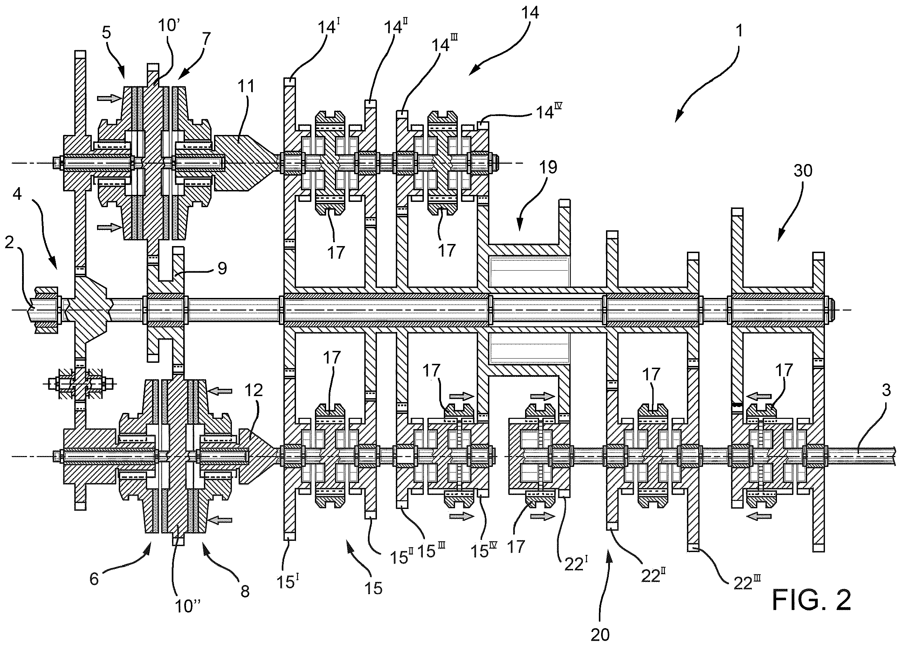

In a phase of operation of transmission 1 of the work vehicle (figure 2), the vehicle is moving at a constant speed, for instance using the first speed ratio combined with the first gear ratio of the gear selecting range 20. In such configuration, the forward clutch 5 is engaged, the odd clutch 8 is engaged and the synchronizers 17 select the gears 15^{iv} and 20'. The torque applied by the engine shaft 2 goes therefore through the forward clutch 5, housings 10', 10ʺ, the odd clutch 8, the odd shaft 12, the gear 15^{iv}, the intermediate geared shaft 19, the range selecting stage 20 and then to the output shaft 3 and the driving gears.

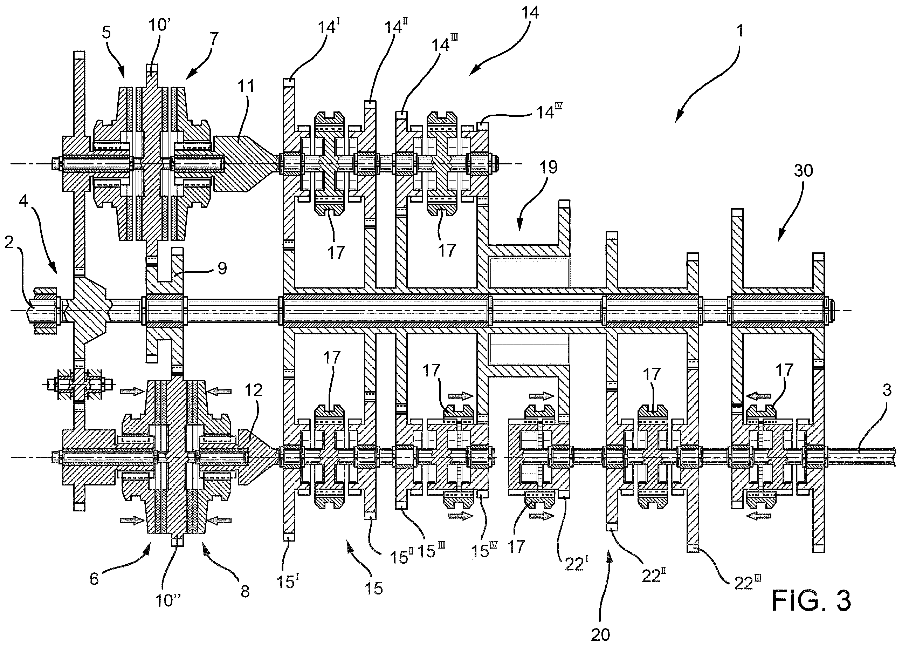

In a first phase of the above-mentioned method (figure 3), when the operator or controller requests vehicle deceleration, the forward clutch 5 will be disengaged and the rearward clutch 6 will be engaged. The odd clutch 8 is maintained engaged and the synchronizers 17 continue to select the gears 15^{iv} and 20'.

In this way, the rearward clutch 6 uses the energy of the engine shaft 2 to decelerate the output shaft 3 by slipping and therefore dissipating the energy stored in transmission 1. In particular, the torque applied by the engine shaft 2 goes therefore through the rearward clutch 6 and housings 10', 10ʺ but meet the resistance of the vehicle, which is still moving, and therefore housing 10ʺ and the odd clutch 8 slip; by slipping, they act like a braking couple on transmission 1 and therefore decelerates the vehicle.

The aforementioned configuration is maintained till the work vehicle arrives to a preset value of velocity or till the work vehicle is at stand-still. The preset velocity may be lower than 0,5 km/h and preferably about 0,3 km/h. More preferably the vehicle is at stand-still.

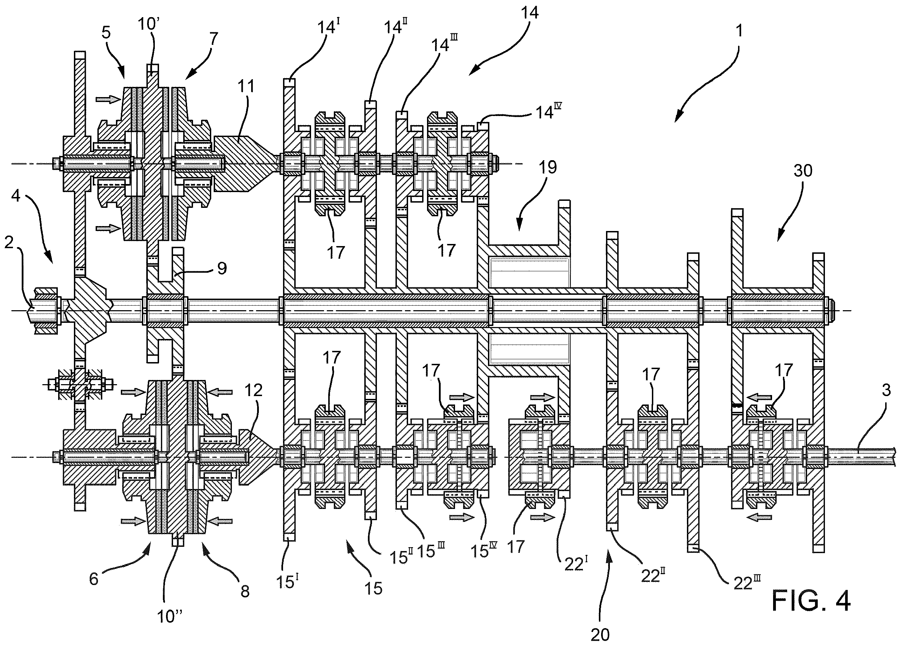

In a second phase of the above-mentioned method (figure 4) the forward clutch 5 and the rear clutch 6 have been engaged together in order to maintain the vehicle at stand-still or at the preset velocity. The odd clutch 8 is maintained engaged and the synchronizers 17 continue to select the gears 15^{iv} and 20'. In this way, the preset value of velocity (or the stand-still phase) is maintained by the balance between the torque added by the forward clutch 5 and the dissipation given by the rearward clutch 6. In this situation housings 10' slips with forward clutch 5 and housing 10ʺ slips with odd clutch 8. The balance between the driving torque given by forward clutch 5 and the braking torque given by rearward clutch 6 guarantees the standstill (or preset velocity) condition of the work vehicle.

Obviously, if the vehicle is moving at a preset value of velocity the braking torque applied by the rearward clutch 6 will be greater with respect to the braking torque applied if the vehicle is still.

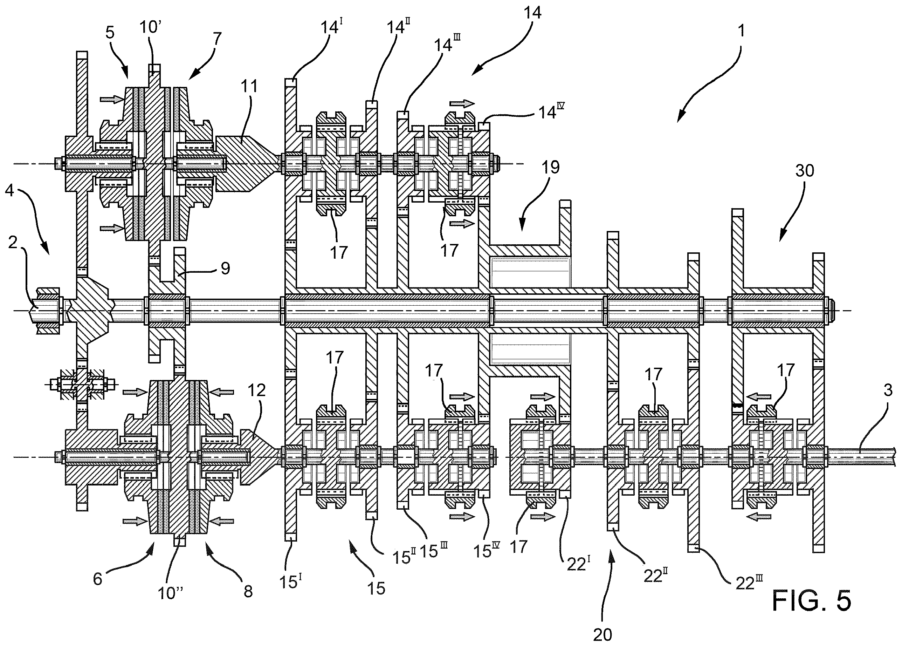

In a third phase of the above mentioned method (figure 5) one the gears 14, for instance gear 14^{iv}, is engaged through the activation of the respective synchronizer 17. The forward clutch 5 and the rear clutch 6 are maintained together engaged. The odd clutch 8 is maintained engaged and the synchronizers 17 continue to select the gears 15^{iv} and 20'. Dynamically, the situation of the previous velocity maintenance phase is the same.

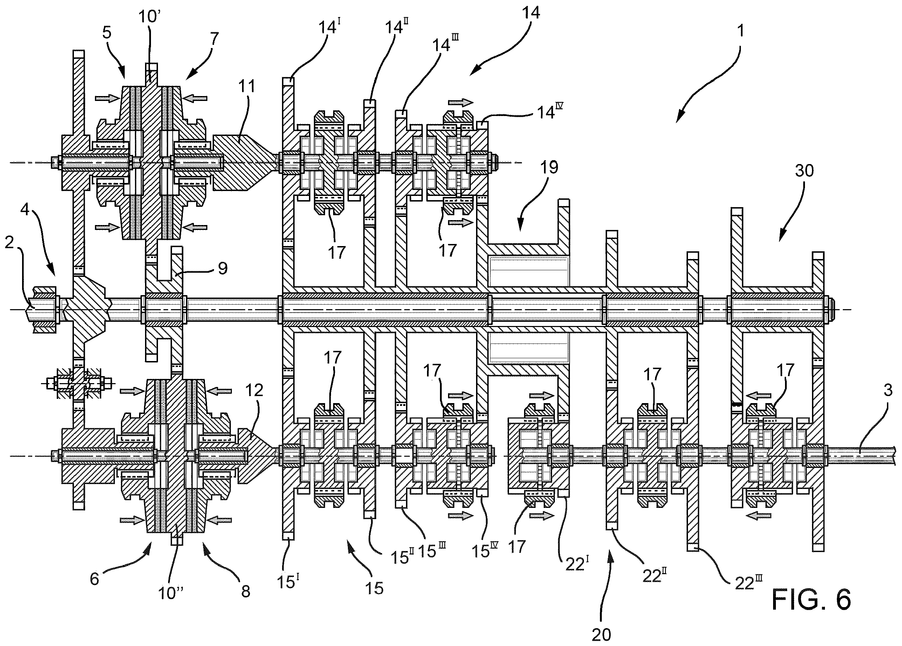

In a fourth phase of the above mentioned method (figure 6) the even clutch 7 is engaged. The forward clutch 5 and the rear clutch 6 are maintained together engaged. The odd clutch 8 is maintained engaged and the respective synchronizers 17 continue to select the gears 14^{iv}, 15^{iv} and 20'. The even clutch 7 is engaged with a preset pressure slope in order to gently lock the transmission 1.

By selecting the even clutch 7, the intermediate geared shaft 19 is blocked because of a mechanical short circuit which is generated between the odd shaft 12 and the even shaft 11 through gears 14^{iv}, 15^{iv} and housings 10', 10ʺ via intermediate gear 9. In this way the intermediate geared shaft 19 is blocked and the output shaft 3 is blocked consequently, being connected to the intermediate gearing 19 by at least the range selecting stage 20.

Obviously, if the vehicle is not at stand-still but moving, the remaining kinetic energy of transmission 1 will be dissipated by the slipping of odd clutch 8 during the engagement of even clutch 7.

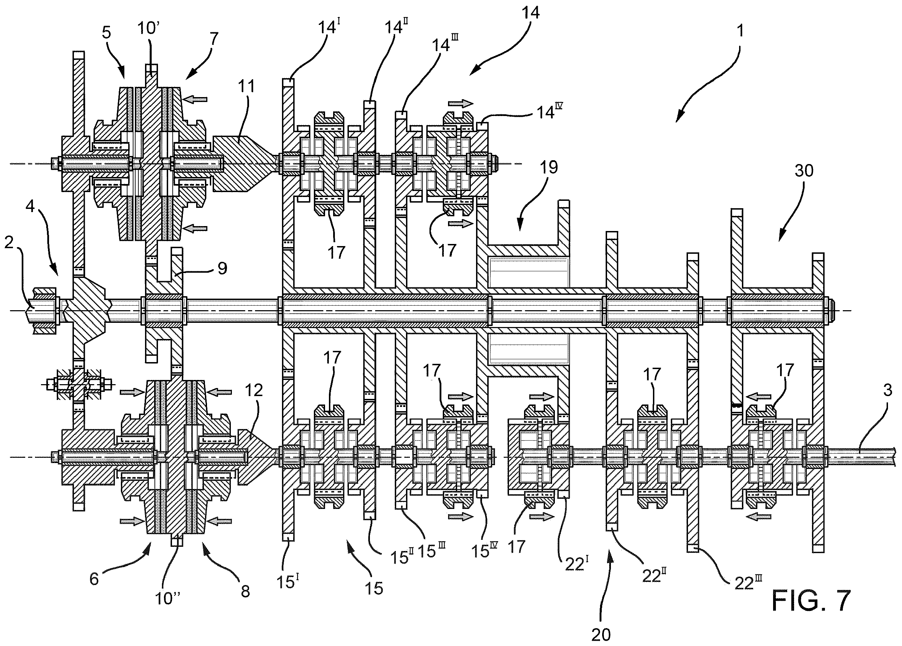

In a fifth phase of the above mentioned method phase of operation of the transmission 1 (figure 7), the transmission 1 is locked and therefore the forward clutch 5 and the rearward clutch 6 are disengaged. The even clutch 7 and odd clutch 8 may preferably be maintained engaged and the respective synchronizers 17 continue to select the gears 14^{iv}, 15^{iv} and 20' . In this way, the engine shaft 2 is totally decoupled from transmission 1 and no energy is wasted for slipping in rearward clutch 6. Clutches 7 and 8 are maintained engaged in order to avoid an overload on locking gear 14^{iv}.

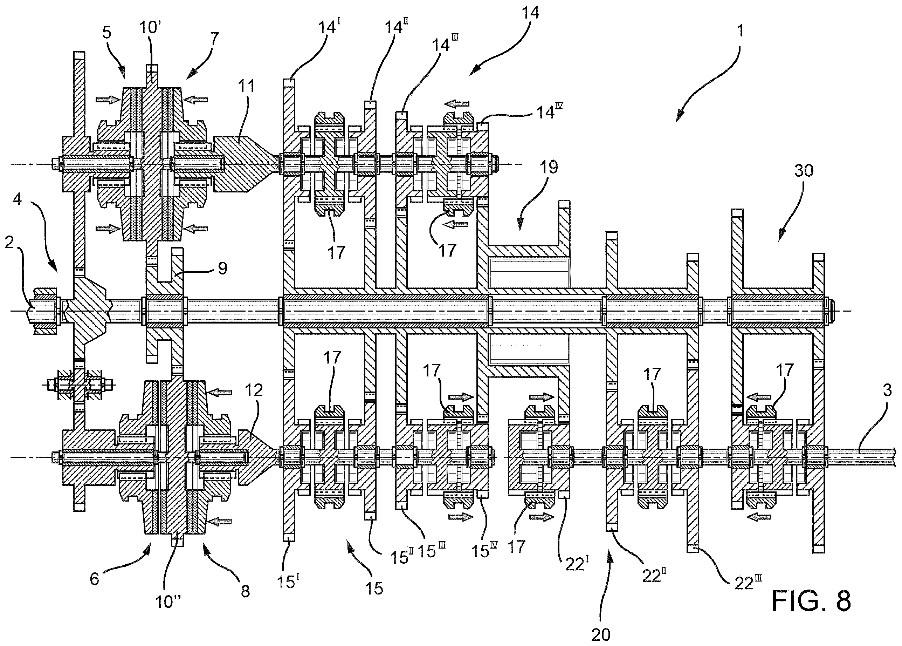

The transmission 1 can be unlocked from the locked state obtained by the above described method thanks to the following unlocking method comprising the phase disclosed in figure 8

The forward clutch 5 is engaged and the even clutch 7 is disengaged simultaneously. In this way, the driving torque transmitted by the forward clutch goes through transmission 1 to the output shaft 3 as in standard operation of the transmission because the mechanical short-circuit caused by the coupling of the even clutch 7 is removed.

The above described method may be advantageously implemented on a program in the control unit of the aforesaid elements of transmission 1 and can be therefore actioned automatically without user input.

In view of the foregoing, the advantages of the locking method for a transmission 1 according to the invention are apparent.

The locking method according to the invention permits to completely decouple the engine shaft 2 from the transmission and therefore the clutches do not dissipate uselessly energy. In this way, the vehicle can be maintained in the locked condition for all the time needed.

Since the transmission can be firmly blocked, the work vehicle may be stopped and maintained still also on slopes.

Moreover, since the passive load of the transmission 1 is not connected to the engine input shaft 2, the fuel consumption of the engine is reduced.

The locking condition is obtained by controlling clutches 5 and 6, i.e. by controlling pressure of the hydraulic fluid inside them. Such control is very simple and may be easily implemented.

Advantageously the method can be automated and can be used automatically in a totally automatic work vehicle.

It is clear that modifications can be applied to the described locking method for a transmission which do not extend beyond the scope of protection defined by the claims.

For example, the above described method can be implemented in a DCT transmission comprising different elements with respect to the described one.

The first decelerating phase may be reached simply thanks to standard braking systems.

For example, the intermediate gear 9 may have the same gear ratio with respect to housings 10' and 10ʺ or an additional creeping stage may be present between the range selecting stage 20 and the output shaft 3.

Moreover, any couple of gears of the gears sets 14, 15 may be used to short-circuit transmission 1, example gears 14ⁱ and 15ⁱ, l4ⁱⁱ and 15ⁱⁱ or l4ⁱⁱⁱ and l5ⁱⁱⁱ or a different combination of one gear 14 of even shaft 11 and an odd gear 15 of the odd shaft 12.

Further, using bigger diameter gears to short-circuit transmission 1, even and odd clutches 7 and 8 may be disengaged.

## Claims

1. Method for locking a dual clutch transmission (1) of a work vehicle, said dual clutch transmission (1) essentially comprising:
• an engine input shaft (2) configured to be coupled to the output of an engine of said work vehicle,
• a shaft (19) configured to be coupled to a drive system of said work vehicle and
• a forward clutch (5) and a rearward clutch (6), each configured to be coupled to the engine input shaft (2) ;
• first and second intermediate shafts (11, 12) each configured to carry a plurality of gears (14, 15), said first and second intermediate shaft (11, 12) being configured to be coupled, via respective first and second clutches (7, 8), to said forward clutch (5) and to said rearward clutch (6) and being configured to be coupled to said shaft (19) defining with one of said gears (14, 15) a predetermined speed ratio between said engine input shaft (2) and said shaft (19), each of said gears (14, 15) defining a different predetermined speed ratio among them between said engine input shaft (2) and said shaft (19),
said locking method being **characterized by** comprising the following phases:
• a first decelerating phase in which the vehicle speed is reduced until a predetermined velocity while a gear of said plurality of gears (14, 15) is coupled to said shaft (19) to give a driving torque to one of said first and second shafts (11, 12);
• a second phase in which said vehicle is maintained at said predetermined velocity;
• a third phase in which a gear of said plurality of gears (14, 15) of the other of said first and second shafts (11, 12) is engaged;
• a fourth phase in which said first and second clutches (7, 8) are both engaged in order to block said dual clutch transmission (1); and
• a fifth phase in which said forward and rearward clutches (5, 6) are disengaged and said input shaft (2) is consequently decoupled from said dual clutch transmission (1).

2. Method for locking a dual clutch transmission (1) according to claim 1 **characterized in that** in said first decelerating phase one of said forward clutch (5) and said rearward clutch (6) is disengaged and the other between said forward clutch (5) and said rearward clutch (6) is modulated in order to give a braking torque to said one of said first and a second intermediate shaft (11, 12) until a pre-set velocity of said work vehicle is reached.

3. Method for locking a dual clutch transmission (1) according to any of claims 1 or 2 **characterized in that** in said second phase, when said determined pre-set value of velocity of said work vehicle is reached, one of said forward clutch (5) and said rearward clutch (6) is modulated to give a driving torque to the other of said first and a second intermediate shaft (11, 12) in order to balance the braking torque given by the other between said forward clutch (5) and said rearward clutch (6) and maintain said work vehicle at said pre-set velocity.

4. Method for locking a dual clutch transmission (1) according to any of the preceding claims **characterized in that** the block of said transmission being obtained by a mechanical short circuit between the gears (14, 15) of said first and second shafts (11, 12), via said shaft (19) and said first and second clutches (7, 8).

5. Method for locking a dual clutch transmission (1) according to any of the preceding claims **characterized in that** said predetermined velocity is a 0 km/h velocity.

6. Method for unlocking a dual clutch transmission (1) of a work vehicle which has been locked thanks to the method of any of the preceding claims, **characterized by** simultaneously engaging said forward clutch (5) and disengaging said other of said first and a second intermediate shaft (11, 12) from said forward and rearward clutches (5, 6).

7. Method for locking a dual clutch transmission (1) according to any of claims 1 to 5 wherein the dual clutch transmission further comprises a range selecting stage (20) configured to couple the shaft 19) with the output shaft (3) .

## Patentansprüche

1. Verfahren zum Verriegeln eines Doppelkupplungsgetriebes (1) eines Arbeitsfahrzeuges, wobei das Doppelkupplungsgetriebe (1) im Wesentlichen umfasst:
• eine Motor-Eingangswelle (2), die dazu eingerichtet ist, mit dem Ausgang eines Motors des Arbeitsfahrzeuges gekoppelt zu werden,
• eine Welle (19), die dazu eingerichtet ist, mit einem Antriebssystem des Arbeitsfahrzeuges gekoppelt zu werden und
• eine Vorwärtskupplung (5) und eine Rückwärtskupplung (6), die jeweils dazu eingerichtet sind, mit der Motor-Eingangswelle (2) gekoppelt zu werden;
• eine erste und eine zweite Zwischenwelle (11, 12), die jeweils dazu eingerichtet sind, eine Mehrzahl von Zahnrädern (14, 15) zu tragen, wobei die erste und die zweite Zwischenwelle (11, 12) dazu eingerichtet sind, über eine entsprechende erste und zweite Kupplung (7, 8) mit der Vorwärtskupplung (5) und der Rückwärtskupplung (6) gekoppelt zu werden, und dazu eingerichtet sind, mit der Welle (19) gekoppelt zu werden, um mit einem der Zahnräder (14, 15) ein vorbestimmtes Drehzahlverhältnis zwischen der Motor-Eingangswelle (2) und der Welle (19) zu definieren, wobei jedes der Zahnräder (14, 15) ein unterschiedliches vorbestimmtes Drehzahlverhältnis zwischen der Motor-Eingangswelle (2) und der Welle (19) definiert,
wobei das Verriegelungsverfahren **dadurch gekennzeichnet ist, dass** es die folgenden Phasen umfasst:
• eine erste Bremsphase, in welcher die Fahrzeuggeschwindigkeit bis auf eine vorbestimmte Geschwindigkeit reduziert wird, während ein Zahnrad der Mehrzahl von Zahnrädern (14, 15) mit der Welle (19) gekoppelt ist, um ein Antriebsdrehmoment an eine aus der ersten und der zweiten Welle (11, 12) abzugeben
• eine zweite Phase, in welcher das Fahrzeug die vorbestimmte Geschwindigkeit beibehält;
• eine dritte Phase, in welcher ein Zahnrad der Mehrzahl von Zahnrädern (14, 15) mit einer anderen aus der ersten und der zweiten Welle (11, 12) in Eingriff gebracht wird;
• eine vierte Phase, in welcher die erste und die zweite Kupplung (7, 8) beide eingekuppelt sind, um das Doppelkupplungsgetriebe (1) zu blockieren; und
• eine fünfte Phase, in welcher die Vorwärts- und die Rückwärtskupplung (5, 6) ausgekuppelt sind und die Motor-Eingangswelle (2) infolgedessen von dem Doppelkupplungsgetriebe (1) entkoppelt ist.

2. Verfahren zum Verriegeln eines Doppelkupplungsgetriebes (1) nach Anspruch 1, **dadurch gekennzeichnet, dass** in der ersten Bremsphase eine aus der Vorwärtskupplung (5) und der Rückwärtskupplung (6) ausgekuppelt ist und die andere aus der Vorwärtskupplung (5) und der Rückwärtskupplung (6) derart reguliert wird, dass ein Bremsdrehmoment auf eine aus der ersten und der zweiten Zwischenwelle (11, 12) aufgebracht wird, bis eine voreingestellte Geschwindigkeit des Arbeitsfahrzeuges erreicht ist.

3. Verfahren zum Verriegeln eines Doppelkupplungsgetriebes (1) nach einem der Ansprüche 1 oder 2, **dadurch gekennzeichnet, dass** in der zweiten Phase, wenn der bestimmte voreingestellte Geschwindigkeitswert des Arbeitsfahrzeuges erreicht ist, eine aus der Vorwärtskupplung (5) und der Rückwärtskupplung (6) derart reguliert wird, dass ein Antriebsdrehmoment auf die andere aus der ersten und der zweiten Zwischenwelle (11, 12) aufgebracht wird, um das Bremsdrehmoment auszugleichen, das von der jeweils anderen aus der Vorwärtskupplung (5) und der Rückwärtskupplung (6) aufgebracht wird, und das Arbeitsfahrzeug auf der voreingestellten Geschwindigkeit zu halten.

4. Verfahren zum Verriegeln eines Doppelkupplungsgetriebes (1) nach einem der vorangehenden Ansprüche, **dadurch gekennzeichnet, dass** die Blockade des Getriebes durch einen mechanischen Kurzschluss zwischen den Zahnrädern (14, 15) der ersten und der zweiten Welle (11, 12) mittels der Welle (19) und der ersten und der zweiten Kupplung (7, 8) erreicht wird.

5. Verfahren zum Verriegeln eines Doppelkupplungsgetriebes (1) nach einem der vorangehenden Ansprüche, **dadurch gekennzeichnet, dass** die vorbestimmte Geschwindigkeit eine Geschwindigkeit von 0 km/h ist.

6. Verfahren zum Entriegeln eines Doppelkupplungsgetriebes (1) eines Arbeitsfahrzeuges, welches durch ein Verfahren nach einem der vorangehenden Ansprüche verriegelt wurde, **gekennzeichnet durch** das simultane Einkuppeln der Vorwärtskupplung (5) und Entkoppeln der anderen aus der ersten und der zweiten Zwischenwelle (11, 12) von der Vorwärts- und der Rückwärtskupplung (5, 6).

7. Verfahren zum Verriegeln eines Doppelkupplungsgetriebes (1) nach einem der Ansprüche 1 bis 5, wobei das Doppelkupplungsgetriebe weiterhin eine Bereichsauswahlstufe (20) umfasst, die dazu eingerichtet ist, die Welle (19) mit der Ausgangswelle (3) zu koppeln.

## Revendications

1. Méthode de verrouillage d'une transmission à double embrayage (1) d'un véhicule de travail, ladite transmission à double embrayage (1) comprend essentiellement :
• un arbre d'entrée moteur (2) configuré pour être accouplé à la sortie d'un moteur dudit véhicule de travail,
• un arbre (19) configuré pour être accouplé à un système d'entraînement dudit véhicule de travail et
• un embrayage avant (5) et un embrayage arrière (6), chacun configuré pour être accouplé à l'arbre d'entrée moteur (2) ;
• des premier et deuxième arbres intermédiaires (11, 12) chacun configuré pour supporter une pluralité d'engrenages (14, 15), lesdits premier et deuxième arbres intermédiaires (11, 12) étant configurés pour être accouplés, par le biais des premier et deuxième embrayages respectifs (7, 8), audit embrayage avant (5) et audit embrayage arrière (6) et étant configurés pour être accouplés audit arbre (19) définissant avec un desdits engrenages (14, 15) un rapport de vitesse prédéterminé entre ledit arbre d'entrée moteur (2) et ledit arbre (19), chacun desdits engrenages (14, 15) définissant un rapport de vitesse prédéterminé différent entre eux entre ledit arbre d'entrée moteur (2) et ledit arbre (19),
ladite méthode de verrouillage étant **caractérisée en ce qu'**elle comprend les étapes suivantes comprenant :
• une première phase de décélération dans laquelle la vitesse du véhicule est réduite jusqu'à atteindre une vitesse prédéterminée lorsqu'un engrenage de ladite pluralité d'engrenages (14, 15) est accouplé audit arbre (19) afin de fournir un couple d'entraînement à un desdits premier et deuxième arbres (11, 12);
• une deuxième phase dans laquelle ledit véhicule est maintenu à ladite vitesse prédéterminée ;
• une troisième phase dans laquelle un engrenage de ladite pluralité d'engrenages (14, 15) de l'autre desdits premier et deuxième arbres (11, 12) est en prise ;
• une quatrième phase dans laquelle lesdits premier et deuxième embrayages (7, 8) sont tous les deux en prise afin de bloquer ladite transmission à double embrayage (1) ; et
• une cinquième phase dans laquelle lesdits embrayages avant et arrière (5, 6) ne sont plus en prise et ledit arbre d'entrée (2) est en conséquence découplé de ladite transmission à double embrayage (1).

2. Méthode de verrouillage d'une transmission à double embrayage (1) selon la revendication 1, **caractérisée en ce que**, dans ladite première phase de décélération, un dudit embrayage avant (5) et dudit embrayage arrière (6) n'est plus en prise et l'autre entre ledit embrayage avant (5) et ledit embrayage arrière (6) est modulé afin de fournir un couple de freinage à l'un desdits premier et deuxième arbres intermédiaires (11, 12) jusqu'à atteindre la vitesse prédéfinie dudit véhicule de travail.

3. Méthode de verrouillage d'une transmission à double embrayage (1) selon l'une quelconque des revendications 1 ou 2, **caractérisée en ce que**, dans ladite deuxième phase, lorsque ladite limite de vitesse prédéterminée dudit véhicule de travail est atteinte, un dudit embrayage avant (5) et dudit embrayage arrière (6) est modulé afin de fournir un couple d'entraînement à l'autre desdits premier et deuxième arbres intermédiaires (11, 12) pour équilibrer le couple de freinage fourni par l'autre entre ledit embrayage avant (5) et ledit embrayage arrière (6) et pour maintenir ledit véhicule de travail à ladite limite de vitesse prévue.

4. Méthode de verrouillage d'une transmission à double embrayage (1) selon l'une quelconque des revendications précédentes, **caractérisée en ce que** le blocage de ladite transmission étant obtenu par un court-circuit mécanique entre les engrenages (14, 15) desdits premier et deuxième arbres (11, 12), par le biais dudit arbre (19) et desdits premier et deuxième embrayages (7, 8).

5. Méthode de verrouillage d'une transmission à double embrayage (1) selon l'une quelconque des revendications précédentes, **caractérisée en ce que** ladite vitesse prédéterminée s'élève à une vitesse de 0 km/h.

6. Méthode de déverrouillage d'une transmission à double embrayage (1) d'un véhicule de travail qui a été verrouillé grâce à la méthode selon l'une quelconque des revendications précédentes, **caractérisée par** la mise en prise dudit embrayage avant (5) et la non-mise en prise simultanées de l'autre desdits premier et deuxième arbres intermédiaires (11, 12) à partir desdits embrayages avant et arrière (5, 6).

7. Méthode de verrouillage d'une transmission à double embrayage (1) selon l'une quelconque des revendications 1 à 5 dans laquelle la transmission à double embrayage comprend en outre une phase de sélection de plage (20) configurée pour accoupler l'arbre (19) à l'arbre de sortie (3).
